# EUROPEAN PATENT SPECIFICATION

(11) **EP 1 840 399 B1**
(45) Date of publication and mention of the grant of the patent: **18.06.2014**
(21) Application number: 05844886.1
(22) Date of filing: 28.12.2005
(51) Int. Cl.: F16D 3/06, B62D 1/16, B62D 1/20, C10M 103/06, C10M 115/08, C10M 135/18, C10M 137/10, C10M 169/00

(54) **COLLAPSIBLE COLUMN**
ZUSAMMENKLAPPBARE SÄULE
COLONNE PLIABLE

(30) Priority: 28.12.2004 JP 2004381077; 20.01.2005 JP 2005013187
(43) Date of publication of application: 03.10.2007
(73) Proprietor: NSK LTD., Shinagawa-ku, Tokyo 141-8560 (JP)
(72) Inventor: FUJITA, Yasunobu c/o NSK Ltd, Kanagawa 251-8501 (JP); YOKOUCHI, Atsushi c/o NSK Ltd, Kanagawa 251-8501 (JP); YAMADA, Yasuhisa c/o NSK St. Systems Co., Ltd., Gunma 371-8528 (JP)
(74) Representative: Grünecker, Kinkeldey, Stockmair & Schwanhäusser
(86) International application number: PCT/JP2005/024146
(87) International publication number: WO 2006/070893

(56) References cited:
- WO-A1-2004/081156
- JP-A- 08 259 980
- JP-A- 09 316 477
- JP-A- 2003 213 284
- JP-A- 2005 008 737

## Description

### TECHNICAL FIELD

The present invention relates to a telescopic shaft adapted to be incorporated in a steering shaft or the like of a vehicle.

### BACKGROUND ART

In a conventional steering mechanism of an automobile, in order to absorb a displacement in the axial direction generated in the running state of the automobile and not to transmit such displacement or vibrations to the steering wheel, a telescopic shaft, formed by a spline coupling of a male shaft and a female shaft, is employed in a part of the steering mechanism. In such telescopic shaft, it is required to reduce a sliding resistance in a sliding motion of the spline part in the axial direction.

Because of such situation, the sliding resistance has been lowered by coating a nylon film on the spline part of the male shaft of the telescopic shaft and by coating a grease on the sliding part. Also there is known a telescopic shaft for vehicle steering in which, in groove portions provided on an external periphery portion of an inner shaft and on an internal periphery portion of an outer shaft, a ball is disposed with an elastic member which is disposed between the groove portion of he inner shaft and the ball, wherein the ball is rotated at a displacing movement in the axial direction thereby reducing the sliding resistance of the male shaft and the female shaft, while the ball is constricted at a rotating movement thereby transmitting a torque (cf. Patent Reference 1). In such telescopic shaft for vehicle steering, in order to enable a torque transmission even in case of the breakage in the ball, a male groove and a female groove of combined cross sections having a certain play are provided on the inner shaft and the outer shaft.

Patent Reference 1: JP-A-2001-50293
A further known telescopic shaft is disclosed by WO 2004/081156, which is considered as the closest prior art.

### DISCLOSURE OF THE INVENTION

### PROBLEMS TO BE SOLVED BY THE INVENTION

However, even in the telescopic shaft having such spline coupling, a sticking or a torque variation occurs in the sliding portion in a telescoping motion in the axial direction and is transmitted as a vibration to the steering wheel, thereby detrimentally affecting the feeling of steering. The present invention is made in consideration of such situation, and an object of the present invention is to provide a telescopic shaft capable of torque transmission without detrimentally affecting the feeling of steering.

### MEANS FOR SOLVING THE PROBLEMS

In order to accomplish the aforementioned object, according to the present invention, there is provided a telescopic shaft according to all the features of claim 1.

### EFFECT OF THE INVENTION

The telescopic shaft of the present invention, in which the sealed grease contains a base oil of a specified dynamic viscosity and an extreme pressure additive, enables to reduce a difference between static friction and dynamic friction in case of a sliding motion of the telescopic shaft, thereby to suppress a sticking or a torque variation and to prevent deterioration in the feeling of steering.

### BRIEF DESCRIPTION OF THE DRAWINGS

Fig. 1 is a lateral view of a steering mechanism of an automobile utilizing a telescopic shaft of the present invention.
Fig. 2 is a longitudinal cross-sectional view illustrating an example of the telescopic shaft in a lower steering shaft part and an upper steering shaft part.
Fig. 3 is a transversal cross-sectional view, along an end portion of a female shaft, of the telescopic shaft illustrated in Fig. 2.
Fig. 4 is a longitudinal cross-sectional view illustrating another example of the telescopic shaft.
Fig. 5 is a cross-sectional view along a line A-A in Fig. 4.
Fig. 6 is a longitudinal cross-sectional view illustrating still another example of the telescopic shaft.
Fig. 7 is a cross-sectional view along a line X-X in Fig. 7.
Fig. 8 is a graph illustrating a relation between an amount of addition of a thickener and a feeling in a manual turn, obtained in Example.
Fig. 9 is a graph illustrating a relation between an amount of addition of MoDTP and a feeling in a manual turn, obtained in Example.
Fig. 10 is a graph illustrating a relation between a dynamic viscosity of base oil and a feeling in a manual turn, obtained in Example.

### EXPLANATION OF THE REFERENCE NUMERALS AND SIGNS

- 5, 41, 61: male shaft
- 6, 42, 62: female shaft
- 20: spline sliding part
- 46: diameter-expanding member
- 47: adjusting screw
- 63, 65: axial groove
- 67: spherical member
- 69: plate spring
- 104: steering shaft
- 107: lower steering shaft
- 120: upper steering shaft

### BEST MODE FOR CARRYING OUT THE INVENTION

In the following, the present invention will be described in detail, with reference to the accompanying drawings.

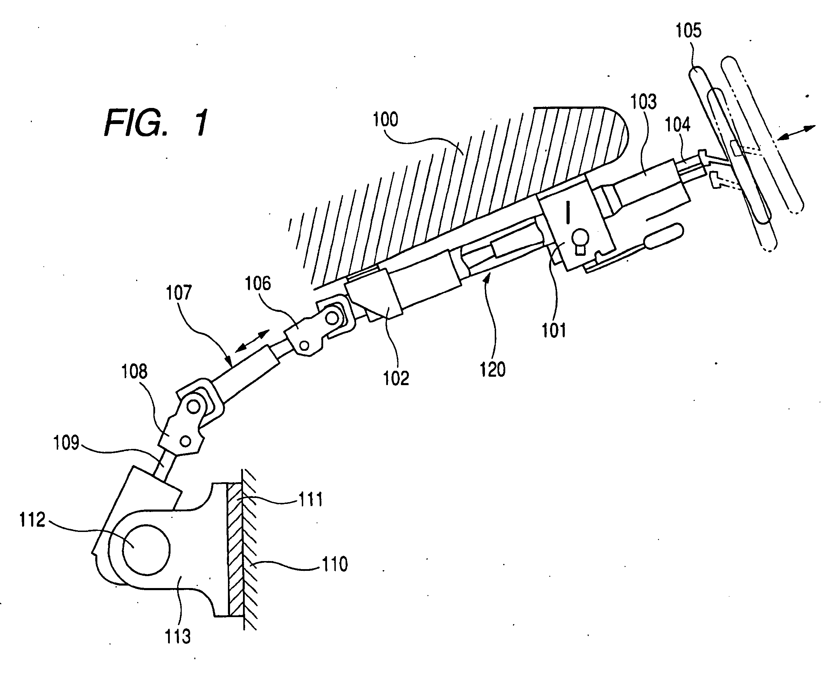

Fig. 1 is a lateral view of a steering mechanism of an automobile utilizing a telescopic shaft embodying the present invention. Referring to Fig. 1, the steering mechanism is constituted of an upper steering shaft part 120 (including a steering column 103 and a steering shaft 104 rotatably supported by the steering column 103), mounted on a member 100 of the automobile body by an upper bracket 101 and a lower bracket 102, a steering wheel 105 mounted on an upper end of the steering shaft 104, a lower steering shaft part 107 connected across a universal joint 106 to a lower end of the steering shaft 104, a pinion shaft 109 connected to the lower steering shaft part 107 across a steering shaft joint 108, a steering rack shaft 112 connected to the pinion shaft 109, and a steering rack support member 113 which supports the steering rack shaft 112 and which is fixed, across an elastic member 111, to another frame 110 of the automotive body.

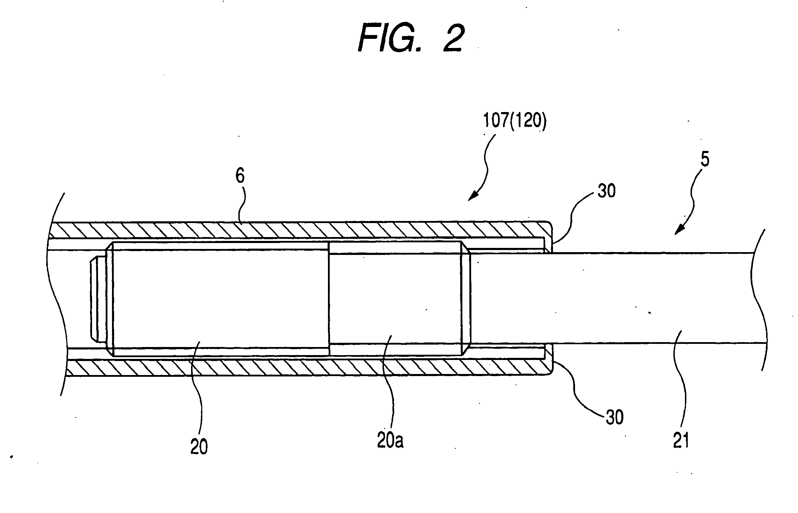

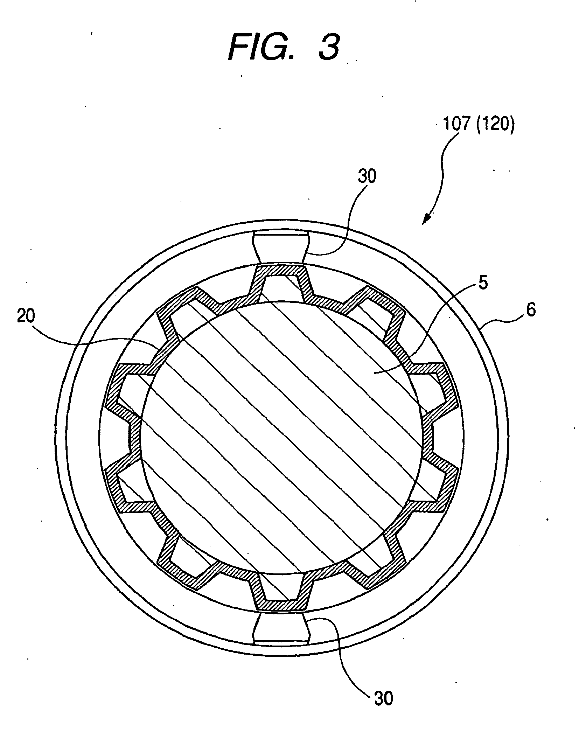

The lower steering shaft part 107 and the upper steering shaft part 120 each includes a telescopic shaft. The telescopic shaft includes, as illustrated in Figs. 2 and 3, a spline sliding part 20 which contains a female spline formed on an internal periphery of a female shaft 6 and a male spline formed on an external periphery of a male shaft 5, and a shaft part 21 of a diameter smaller than that of the spline sliding part 20. The female shaft 6 is equipped, at an end thereof, with a stopper portion 30 for avoiding extraction of the sliding part 20 of the male shaft 5. Also a polyamide film is coated on the spline sliding part 20, except for a portion 20a at the side of the stopper portion. The coating may also be made by polytetrafluoroethylene (PTFE), polyimide or a solid lubricating film.

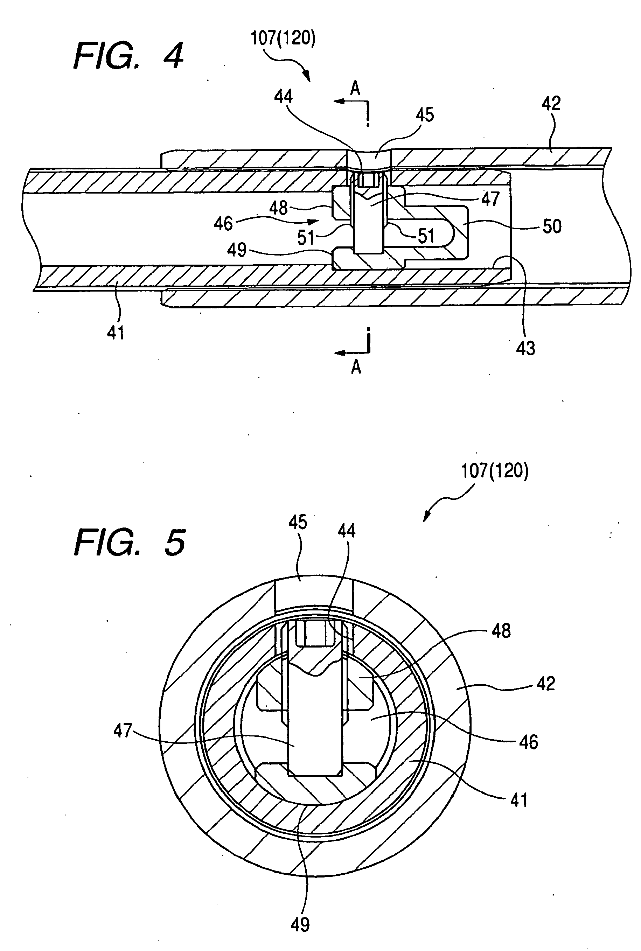

The telescopic shaft may also be constructed as illustrated in Figs. 4 and 5. In such telescopic shaft, a female shaft 42 is spline or serration fitted on a male shaft 41. On an internal periphery of an end portion of the male shaft 41, a cylindrical seat 43 is formed in order to insert a diameter-expanding member 46, and a penetrating hole 44 for inserting an adjusting screw 47 is formed in a radial direction in a part of the seat 43. In an end portion of the female shaft 42, a penetrating hole 45 for inserting the adjusting screw 47 is formed in a radial direction, corresponding to the penetrating hole 44. In the seat 43 of the male shaft 41, a diameter-expanding member 46 for pressing the male shaft 41 in the radial direction is inserted, and, in such diameter-expanding member 46, an adjusting screw 47 for expanding the diameter of the diameter-expanding member 46 is screwed therein. The diameter-expanding member 46 is equipped with a screw part 48 having a female thread for screwing the adjusting screw 47 in the radial direction, and with a receiver part 49 for supporting an end of the adjusting screw 47, so as to be opposed to the screw part 48. Such screw part 48 and the receiver part 49 respectively have cylindrical convex parts which are in contact with an internal cylindrical seat 43 of the male shaft 41. Further, the diameter-expanding member 46 includes a connecting part 50 which connects the screw part 48 and the receiver part 49 integrally so as to enable an elastic deformation in the radial direction.

In such telescopic shaft, after the female shaft 42 is spline fitted with the male shaft 41, the penetrating holes 44 and 45 are aligned in the radial direction and the adjusting screw 47 is tightened radially inwards through the penetrating holes 44 and 45, whereby the screw part 48 and the receiver part 49 of the diameter-expanding member 46 spread in the distance in the radial direction to pressurize the male shaft 41 radially outwards to the female shaft 42. Thus, an adjustment of the tightening force of the adjusting screw 47 allows to regulate the pressure of the male shaft 41 in the radial direction on the female shaft 42, whereby the sliding resistance of the shafts 41, 42 can be easily regulated and the looseness between the shafts 41, 42 can be securely prevented. Also the work efficiency can be improved since the sliding resistance can be easily regulated even after the shafts 41, 42 are assembled. In a portion indicated by 51 in the screw part 48 of the diameter-expanding member 46, a caulking is formed in advance, in order to prevent the adjusting screw 47 from being loosened.

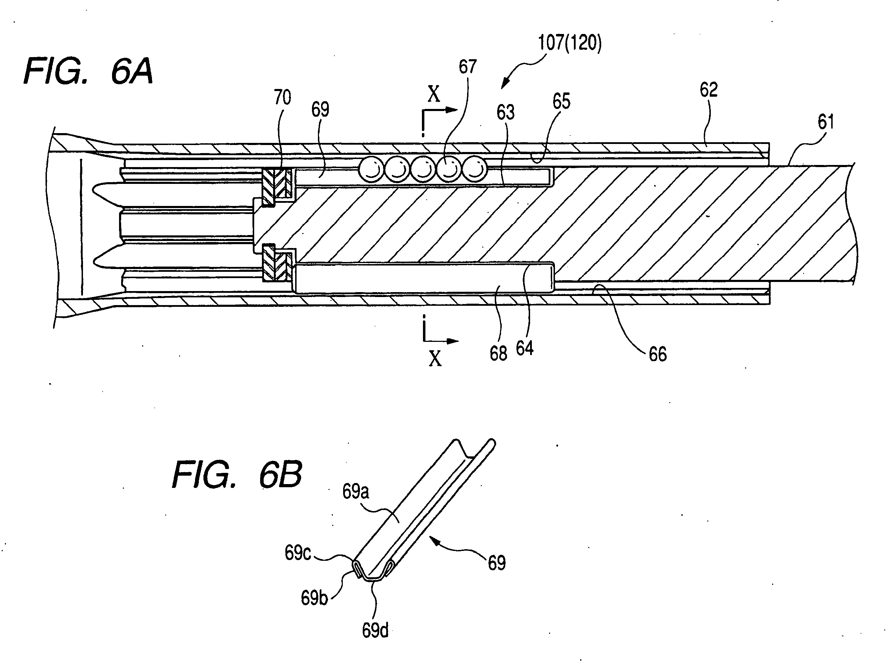

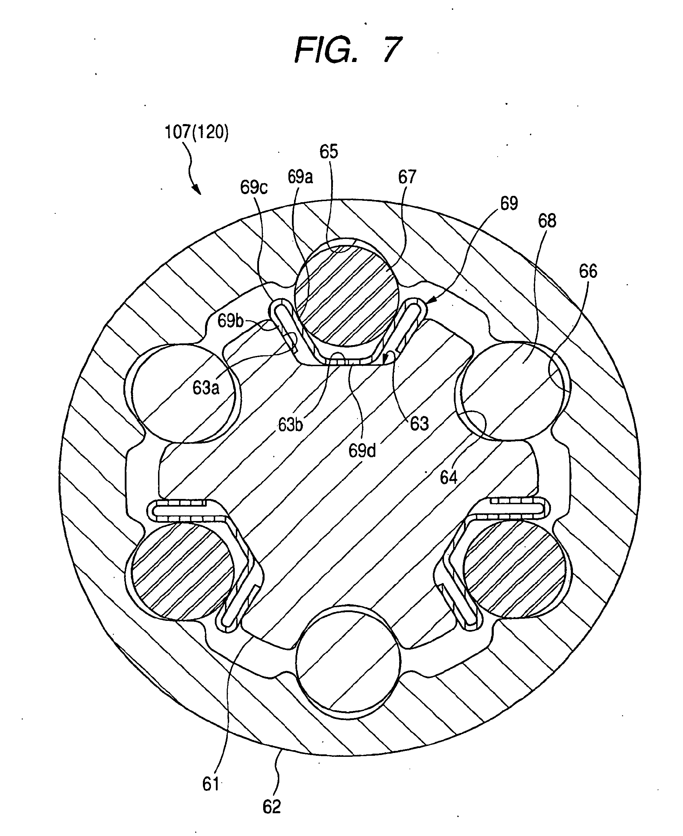

The telescopic shaft can also be constructed as illustrated in Figs. 6 and 7. On an external periphery of a male shaft 61, three grooves 63 extending in the axial direction are equiangularly provided at a distance (phase) of 120° in the circumferential direction. Corresponding thereto on an internal periphery of a female shaft 62, three grooves 65 extending in the axial direction are equiangularly provided at a distance (phase) of 120° in the circumferential direction. Between the axial groove 63 of the male shaft 61 and the axial groove 65 of the female shaft 62, plural rigid spherical members (rolling members or balls) 67 are rollably disposed, so as to roll at the axial relative movement of the shafts 61, 62. The axial groove 65 of the female shaft 62 has a cross section of a substantially arc shape or a substantially gothic arch shape. Also the axial groove 63 of the male shaft 61 is formed by a pair of inclined flat lateral faces 63a and a bottom face 63b formed flatly between the flat lateral faces 63a.

Between the axial groove 63 of the male shaft 61 and the spherical members 67, a plate spring 69 is provided for contacting and pressurizing the spherical members 67. The plate spring 69 includes, as illustrated in Fig. 6 (B), a spherical member side contact portion 69a which contacts the spherical member 67 in two points, a groove side contact portion 69b which is provided in a substantially circumferential direction with a prescribed distance from the spherical member side contact portion 69a and which is in contact with the flat lateral face 63a of the axial groove 63 of the male shaft 61, an urging portion 69c which elastically urges the spherical member side contact portion 69a and the groove side contact portion 69b in a mutually separating direction, and a bottom portion 69d opposed to the bottom face 63b of the axial groove 63. The urging portion 69c has a bent form shaped in a substantially U-like arc form, and the urging portion 69c of such bent form can elastically urge the spherical member side contact portion 69a and the groove side contact portion 69b in a mutually separating direction.

As illustrated in Fig. 7, on the external periphery of the male shaft 61, three axial grooves 64 extend equiangularly at a distance (phase) of 120° in the circumferential direction. Corresponding thereto on an internal periphery of the female shaft 62, three axial grooves 66 extend equiangularly at a distance (phase) of 120° in the circumferential direction. Between the axial groove 64 of the male shaft 61 and the axial groove 66 of the female shaft 62, plural rigid cylindrical members (sliding members or needle rollers) 68 are disposed with slight gaps, so as to slide at the axial relative movement of the shafts 61, 62. The axial grooves 64, 66 have a cross section of a substantially arc shape or a substantially gothic arch shape.

Also as illustrated in Fig. 6, the male shaft 61 is equipped, at an end portion thereof, with a stopper blade 70 having an elastic member, and such stopper blade 70 having elastic member prevents the spherical members 67, the cylindrical members 68 and the plate springs 69 from dropping.

In such telescopic shaft, the spherical members 67 are disposed between the male shaft 61 and the female shaft 62 while the plate spring 69 pressurizes the spherical members 67 to the female shaft 62 in such a level as not to cause a slackness, whereby the slackness between the male shaft 61 and the female shaft 62 can be securely prevented when the torque is not transmitted, and the male shaft 61 and the female shaft 62, in a relative displacement in the axial direction, can slide under a stable sliding load without a slackness. In a state of torque transmission, the plate spring 69 causes an elastic deformation to constrict the spherical members 67 in the circumferential direction, and the cylindrical members 68 disposed in three rows between the male shaft 61 and the female shaft 62 principally perform the function of torque transmission. For example when a torque is entered from the male shaft 41, in an initial stage, no slackness is present by the pressurization with the plate spring 69, and the torque is transmitted under a repulsive force to the torque generated the plate spring 69. In such state, the overall torque transmission is executed in a state where the torques transmitted among the male shaft 61, the plate spring 69, the spherical members 67 and the female shaft 62 are balanced with the input torque. When the torque increases further, the gap between the male shaft 61 and the female shaft 62 across the cylindrical members 68 in the rotational direction is removed, and the subsequent increasing portion of the torque is transmitted by the cylindrical members 68 through the male shaft 61 and the female shaft 62. It is therefore possible to securely prevent the slackness between the male shaft 61 and the female shaft 62 in the rotational direction, and to transmit the torque in a highly rigid state.

In each telescopic shaft of the aforementioned constructions, a following grease is sealed in the gap between the external periphery of the male shaft and the internal periphery of the female shaft.

In the grease, a base oil is restricted in the type as an ester oil having a dynamic viscosity at 25°C of from 40 to 80 mm²/s. A base oil having a dynamic viscosity at 25°C exceeding 210 mm²/s is difficult to penetrate into the sliding contact part, and is difficult to suppress a sticking or a torque variation in the sliding portion, where the external periphery of the male shaft and the internal periphery of the female shaft contact with each other. According to the invention, a base oil having a dynamic viscosity at 25°C of from 40 to 80 mm²/s is used.
The synthetic lubricating oil is an ester oil. Specific examples of the synthetic hydrocarbon oil include a diester oil, a neopentyl-type polyol ester oil, a complex ester oil thereof, and an aromatic ester oil. Such lubricating oils may be employed singly or in a suitable combination of plural kinds, and are regulated to the dynamic viscosity described above. According to the invention, an ester oil such as a diester oil, a polyol ester oil or an aromatic ester oil is advantageous, and a polyol ester oil is particularly preferable as a principal component of the base oil.

As the thickener, a substance that can be dispersed in colloidal state in the base oil and that can form the base oil into a semi-solid or solid state may be employed. Examples of such thickener not covered by the invention include metal soaps such as a lithium soap type, a calcium soap type, a sodium soap type, an aluminum soap type, a lithium complex soap type, a calcium complex soap type, a sodium complex soap type, a barium complex soap type and an aluminum complex soap type, inorganic compounds such as a bentonite type and a clay type, and organic compounds such as a monourea type, a triurea type, a tetraurea type, an urethane type and a sodium terephthalamate type. Such thickeners may be employed singly or in a mixture of two or more kinds.

According to the invention, the thickener is an organic compound of the diurea type.

A content of the thickener is from 5 to 30 % by mass of the entire amount of the grease. An amount less than 5 % by mass is difficult to maintain a greasy state, while an amount exceeding 30 % by mass results in an excessively thick state and cannot obtain a sufficient lubricating state. The amount is preferably from 13 to 23 % by mass, more preferably from 14 to 22 % by mass and most preferably from 15 to 21 % by mass, with respect to the entire amount of grease.

Also an urea compound employed as a thickener allows to form a protective film on a metal surface at a sliding motion thereof, thereby providing more satisfactory friction characteristics. Further, an amount of the thickener from 15 to 21 % by mass enables a firmer protective film formation, thereby suppressing a sticking and a torque variation.

Among the urea compounds, according to the invention, a diurea compound is used as thickener for the telescopic shaft for vehicles, as it has a heat resistance and an excellent oil holding property and is inexpensive. According to the invention, a diurea compound represented by a following general formula [I] is used.

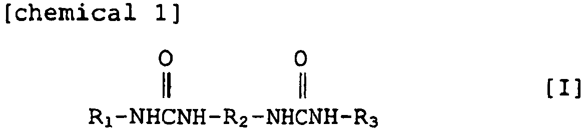

In the formula, R₂ represents an aromatic hydrocarbon group having 6 to 15 carbon atoms; R₁ and R₃ may be same or different each other and each represents a hydrocarbon group or a condensed-ring hydrocarbon group, wherein, in R₁ and R₃, the hydrocarbon group may be either an aliphatic hydrocarbon group or an aromatic hydrocarbon group, and the condensed-ring hydrocarbon group preferably has 9 to 19 carbon atoms.

The diurea compound represented by the general formula [I] can be obtained by reacting, in the base oil, a diisocyanate having R₂ in the skeleton thereof in a proportion of 1 mole and a monoamine having R₁ or R₃ in the skeleton thereof in a proportion of 2 moles in total.

As the diisocyanate having R₂ in the skeleton thereof, diphenylmethane diisocyanate, tolylene diisocyanate, xylylene diisocyanate, biphenylene diisocyanate, dimethyldiphenylene diisocyanae or an alkyl-substituted compound thereof can be employed advantageously.

As the monoamine having a hydrocarbon group as R₁ or R₃ in the skeleton, employable advantageously is aniline, cyclohexylamine, octylamine, toluidine, dodecylaniline, octadecylamine, hexylamine, heptylamine, nonylamine, ethylhexylamine, decylamine, undecylamine, dodecylamine, tetradecylamine, pentadecylamine, nonadecylamine, eicodecylamine, oleylamine, linoleylamine, linolenylamine, methylcyclohexylamine, ethylcyclohexylamine, dimethylcyclohexylamine, diethylcyclohexylamine, butylcyclohexylamine, propylcyclohexylamine, amylcyclohexylamine, cyclooctylamine, benzylamine, benzhydrylamine, phenethylamine, methylbenzylamine, biphenylamine, phenylisopropylamine or phenylhexylamine.

Also as the monoamine having a condensed-ring hydrocarbon group as R₁ or R₃ in the skeleton, employable advantageously is an indene-type amine compound such as aminoindene, aminoindane or amino-1-methyleneindene; a naphthalene-type amino compound such as aminonaphthalene (naphthylamine), aminomethylnaphthalene, aminoethylnaphthalene, aminodimethylnaphthalene, aminocadalene, aminovinylnaphthalene, aminophenylnaphthalene, aminobenzylnaphthalene, aminodinaphthylamine, aminobinaphthyl, amino-1,2-dihydronaphthalene, amino-1,4-dihydronaphthalene, aminotetrahydronaphthalene, or aminooctaline; a condensed bicyclic amine compound such as aminopentalene, aminoazulene or aminoheptalene; an aminofluorene-type amine compound such as aminofluorene, or amino-9-phenylfluorene; an anthracene-type amine compound such as aminoanthracene, aminomethylanthracene, aminodimethylanthracene, aminophenylanthracene, or amino-9,10-dihydroanthracene; a phenanthrene-type compound such as aminophenanthrene, amino-1,7-dimethylphenanthrene, or aminoretene; a condensed tricyclic amine compound such as aminobiphenylene, amino-s-indacene, amino-as-indacene, aminoacenaphthylene, aminoacenaphthene, or aminophenalene; a condensed tetracyclic compound such as aminonaphthacene, aminochrysene, aminopyrene, aminotriphenylene, aminobenzoanthracene, aminoaceanthrylene, aminoaceanthrene, aminoacephenanthrylene, aminoacephenanthrene, aminofluoranthene, or aminopleiadene; a condensed pentacyclic compound such as aminopentacene, aminopentaphene, aminopicene, aminoperylene, aminodibenzoanthracene, aminobenzopyrene, or aminocholanthrene; or a condensed polycyclic (six or more rings) amine compound such as aminocoronene, aminopyranthrene, aminoviolanthrene, aminoisoviolanthrene, or aminoovalene.

The particularly preferable urea compound is a diurea in which, in the general formula [I], R₁ and R₃ each is an alicyclic hydrocarbon group having 6 to 19 carbon atoms or an aromatic hydrocarbon group having 6 to 12 carbon atoms, and R₂ is 4,4'-methyelenediphenyl isocyanate or tolylene diisocyanate. As the grease composition of the present invention contains an extreme pressure additive, it is preferable to employ a thickener, such as the above-described alicyclic/aromatic diurea, that shows little influence such as softening or thickening of grease, by the extreme pressure additive.

In the grease, an extreme pressure additive is added as an essential additive. An amount of addition thereof is, according to the invention, from 0.5 to 10 % by mass with respect to the entire amount of grease. An amount less than 0.1 % by mass is unable to provide a sufficient effect by the addition, while an amount exceeding 10 % by mass shows a saturation of the effect. The amount of addition is more preferably from 0.5 to 7 % by mass, and most preferably from 0.5 to 5 % by mass, with respect to the entire amount of grease.

According to the invention, as an extreme pressure additive, an organic molybdenum compound is adsorbed on a metal surface constituting a rolling surface to form a film rich in reactivity (reactive film layer) to improve a sticking resistance, a load resistance and an abrasion resistance even under a high load and at a low speed. Said organic molybdenum compound is molybdenum dithiophosphate (Mo-DTP), according to the invention.

Also examples of the organometallic compound capable of similarly forming a reactive film layer, but not covered by the invention, include metal dihydrocarbyl dithiophosphates, metal dihydrocarbyl dithiocarbamates and naphthenic acid salts, which may also be used in combination, if necessary. The metal dihydrocarbyl dithiophosphate is preferably a metal dihydrocarbyl dithiophosphate in which each hydrocarbyl group has 4 to 20 carbon atoms, such as zinc dimethyl dithiophosphate, zinc butylisooctyl dithiophosphate, zinc di(4-methyl-2-pentyl)dithiophosphate, zinc di(tetrapropenylphenyl) dithiophosphate, zinc (2-ethyl-1-hexyl) dithiophosphate, zinc (octyl) dithiophosphate, zinc (ethylphenyl) dithiophosphate, zinc (amyl) dithiophosphate, or zinc di (hexyl) dithiophosphate, or foregoing compounds containing lead, cadmium or antimony as a metal instead of zinc.

One example of metal dihydrocarbyl dithiocarbamate is a metal dihydrocarbyl dithiocarbamate in which each hydrocarbyl group has 4 to 20 carbon atoms, such as zinc dimethyl dithiocarbamate, zinc butylisooctyl dithiocarbamate, zinc di(4-methyl-2-pentyl) dithiocarbamate, zinc di(tetrapropenylphenyl) dithiocarbamate, zinc (2-ethyl-1-hexyl) dithiocarbamate, zinc (isooctyl) dithiocarbamate, zinc (ethylphenyl) dithiocarbamate, zinc (amyl) dithiocarbamate, or zinc di (hexyl) dithiocarbamate, or foregoing compounds containing lead, cadmium, antimony, nickel or iron as a metal instead of zinc.

Also polytetrafluoroethylene (PTFE) is extreme pressure additive not covered by the invention. Polytetrafluoroethylene has a cohesion energy smaller than in other polymer compounds, and has a very low critical surface tension, so that the polytetrafluoroethylene particles present in a sliding part become small thin pieces by a shear stress under sliding motion, and easily extends over a counterpart material of the sliding part, thereby providing the sliding part with an excellent lubricating property. In particularly polytetrafluoroethylene having a molecular weight from several thousand to several hundred thousand is preferred.

The grease may contain additives ordinarily added to the grease, such as a load resistance additive, an antioxidant, an antirusting agent and an anticorrosion agent. Amounts of addition thereof are preferably 10 % by mass or less in total, with respect to the entire amount of the grease.

Also the grease preferably has a worked penetration of from 220 to 340, in order to secure an appropriate fluidity. The worked penetration is more preferably from 250 to 310 and most preferably from 260 to 290.

### EXAMPLES

### (Examples 1 to 3 and Comparative Examples 1 and 2)

Test greases are prepared with the formulations shown in Table 1. Diurea employed as the thickener is a diurea compound represented by the general formula [I], and the addition amount of the extreme pressure additive is selected as 3 % by mass of the entire amount of grease. In Examples 2 and 3 and Comparative Example 2, these are added in equal amounts by 3 % by mass in total. Then each test grease is sealed in a gap between the external periphery of the male shaft and the internal periphery of the female shaft of a steering mechanism having the construction illustrated in Fig. 1. At the room temperature and with a joint angle fixed at 30°, torques in rotational direction are input alternately leftward and rightward, thereby causing repeated telescoping motions in the axial direction. In this operation, an acceleration of the male shaft of the telescopic shaft is measured to evaluate presence/absence of sticking or torque variation.

Table 1 summarizes the presence/absence of sticking and torque variation, based on the results of measurement.

**Table 1**

| | Example 1 | Example 2 | Example 3 | Comp. Ex. 1 | Comp. Ex. 2 |
|---|---|---|---|---|---|
| thickener type | diurea | diurea | diurea | Li soap | diurea |
| thickener amount (mass%) | 20 | 15 | 27 | 10 | 13 |
| base oil type | ester oil | PAO | mineral oil | mineral oil | mineral oil |
| base oil dynamic viscosity (mm²/s at 25°C) | 62 | 93 | 210 | 230 | 230 |
| extreme pressure additive (mass%) | MoDTP | MoDTP | MoS₂ | - | MOS₂ |
| | | ZnDTP | | | |
| | | MoDTC | MoDTP | | |
| presence/absence of sticking/torque variation | none | none | none | present | present |

| | | | | | |
|---|---|---|---|---|---|
| PAO: poly-α-olefin MoDTP: molybdenum dithiophosphate MoS₂: molybdenum disulfide MoDTC: molybdenum dithiocarbamate **ZnDTP: zinc dithiophosphate** | | | | | |

### (Examples 4 to 9, Comparative Example 6)

Test greases are prepared with the formulations shown in Table 2, and each test grease is sealed in a gap between the external periphery of the male shaft and the internal periphery of the female shaft of a steering mechanism having the construction illustrated in Fig. 1. The thickeners, Comparative Example 6, are urea compounds represented by the general formula [I], in which R₂ is commonly 4,4' -methylenediphenyl isocyanate, while R₁ and R₃ and a ratio thereof are shown in the Table. Under a temperature cycle of from 100 to 50°C and with a joint angle fixed at 30°, torques are input by rotating the steering wheel alternately leftward and rightward, thereby causing sliding motions repeatedly in 100,000 cycles. In this operation, an acceleration of the external periphery of the telescopic shaft is measured to evaluate presence/absence of change in the frictional force. A larger acceleration indicates a state involving vibrations, and a case, where an acceleration of 0.5G or larger is generated continuously, is judged as that a change in the frictional force is generated. Results are shown in Table 2.

**Table 2**

| | Example 4 | Example 5 | Example 6 | Example 7 | Example 8 |
|---|---|---|---|---|---|
| thickener type | cyclic 10 | cyclic/aromatic = 7/3 | aromatic 10 | cyclic/aromatic = 5/5 | cyclic/aromatic = 3/7 |
| thickener amount (mass%) | 20 | 13 | 30 | 19 | 25 |
| base oil type | ester oil | ester oil | ester oil | ester oil | ester oil |
| base oil dynamic viscosity (mm²/s at 25°C) | 60 | 90 | 20 | 100 | 150 |
| extreme pressure additive (mass%) | MoDTP (2) | MoDTP (2) | MoS₂ (1) | MoDTP (1) | MoDTP (2) |
| | | ZnDTP (0.5) | | | |
| | | MoDTC (1.5) | MoDTP (1) | | MoS₂ (0.5) |
| presence/absence of change in frictional force | none | none | none | none | none |

| | | | | | |
|---|---|---|---|---|---|
| cyclic: alicyclic urea aromatic: aromatic urea aliphatic: aliphatic urea MoDTP: molybdenum dithiophosphate MoS₂: molybdenum disulfide MoDTC: molybdenum dithiocarbamate ZnDTP: zinc dithiophosphate ZnDTC: zinc dithiocarbamate | | | | | |

### (Example 10)

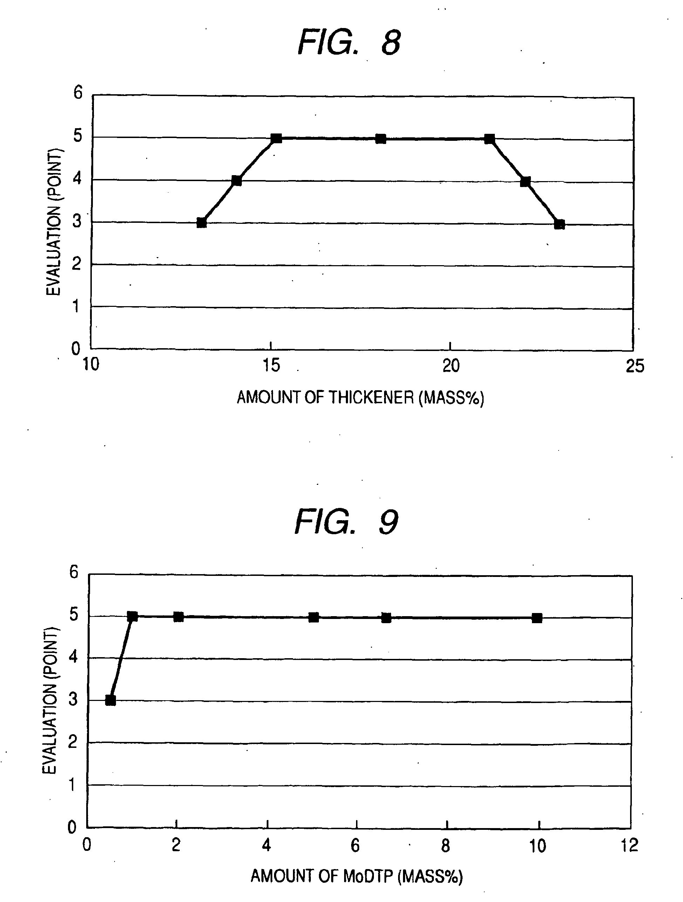

Test greases are prepared by employing a polyol ester oil as the base oil, blending a diurea in which, in the general formula [I], R₁ and R₃ each is an alicyclic hydrocarbon group and R₂ is 4,4'-methylenediphenyl isocyanate, in different amounts and by adding MoDTP in a constant amount. The worked penetration is selected as 250 to 310. Each test grease is sealed in a gap between the external periphery of the male shaft and the internal periphery of the female shaft of the steering mechanism having the construction illustrated in Fig. 1. At the room temperature and with a joint angle fixed at 30°, torques are input by rotating the steering wheel alternately leftward and rightward, thereby causing sliding motions repeatedly in 40 cycles. A number of times of the vibrations felt by the hand is counted, and the results are evaluated in five ranks of 5 points for 0 times, 4 points for 1 to 2 times, 2 points for 3 to 4 times, 2 points for 5 to 10 times, and 1 point for 11 or more times. Evaluations of 3 or higher points are considered as acceptable. Results are illustrated as a graph in Fig. 8.

### (Example 11)

Test greases are prepared by employing a polyol ester oil as the base oil, blending a diurea in which, in the general formula [I], R₁ and R₃ each is an alicyclic hydrocarbon group and R₂ is 4,4'-methylenediphenyl isocyanate, in a constant amount and by adding MoDTP in different amounts. The worked penetration is selected as 270 in any grease. Test greases are evaluated in a similar manner as in Example 11. Results are illustrated as a graph in Fig. 9.

### (Example 12)

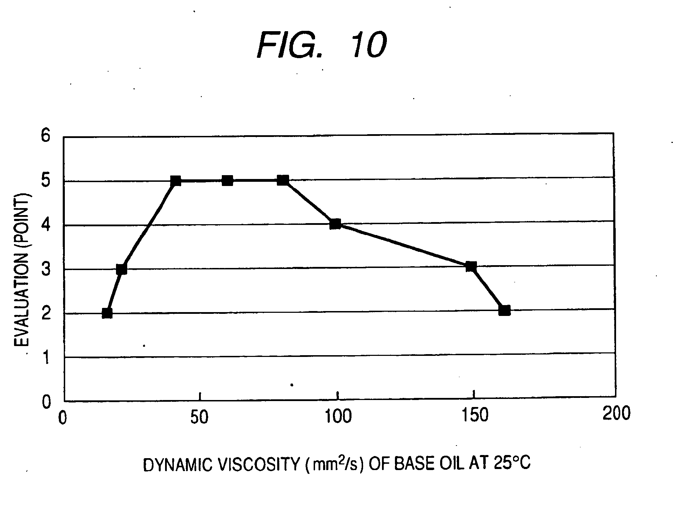

Test greases are prepared by employing polyol ester oils of different dynamic viscosities as the base oil, blending a diurea in which, in the general formula [I], R₁ and R₃ each is an alicyclic hydrocarbon group and R₂ is 4,4'-methylenediphenyl isocyanate, and MoDTP respectively in a constant amount. The worked penetration is selected as 270 in any grease. Test greases are evaluated in a similar manner as in Example 11. Results are illustrated as a graph in Fig. 10.

Based on Examples and Comparative Examples, it is identified, by sealing a grease containing a base oil of a dynamic viscosity at 25°C of 210 mm²/s or less and an extreme pressure additive according to the present invention, to suppress generation of sticking or torque variation, and to reduce the difference between static friction and dynamic friction at the sliding motion of the telescopic shaft, thereby suppressing a change in the frictional force and preventing deterioration in the feeling of steering.

While the present invention is described in detail with reference to specified embodiments, it will be apparent to those skilled in the art that various alterations and modification are possible without departing from the scope of the present invention as claimed.

## Claims

1. A telescopic shaft comprising:
a male shaft (5, 41, 61) and a female shaft (6, 42, 62) which are fitted so as to be capable of a sliding motion but incapable of a rotation, wherein an external periphery of the male shaft (5, 41, 61) and an internal periphery of the female shaft (6, 42, 62) being in contact with each other to transmit a torque in case of rotation, and a grease sealed in a gap between the external periphery of the male shaft and the internal periphery of the female shaft, **characterized in that**
the grease contains
an ester oil as a base oil having a kinematic viscosity of from 40 to 80 mm²/s at 25° C;
an urea compound as a thickener with a content of from 5 to 30 % by mass of the entire amount of the grease, which urea compound is represented by [chemical 1] 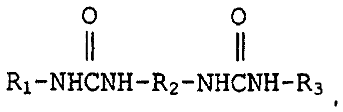 wherein R₂ is an aromatic hydrocarbon group having 6 to 15 carbon atoms and wherein R₁ and R₃ each is an alicyclic hydrocarbon group having 6 to 19 carbon atoms or an aromatic hydrocarbon group having 6 to 12 carbon atoms;
and molybdenum dithiophosphate (Mo-DTP) as an extreme pressure additive in an amount of 0.5% to 10% by mass of the entire amount of grease.

## Patentansprüche

1. Teleskopsäule, umfassend:
eine Vollwelle (5, 41, 61) und eine Hohlwelle (6, 42, 62), die derart ineinander gesteckt sind, dass sie zu einer Gleitbewegung in der Lage sind, jedoch nicht zu einer Drehung in der Lage sind, wobei ein Außenumfang der Vollwelle (5, 41, 61) und ein Innenumfang der Hohlwelle (6, 42, 62) miteinander in Kontakt stehen, um ein Drehmoment im Falle einer Drehung zu übertragen, und ein Schmierfett in einem Zwischenraum zwischen dem Außenumfang der Vollwelle und dem Innenumfang der Hohlwelle eingeschlossen ist, **dadurch gekennzeichnet, dass**
das Schmierfett enthält:
ein Esteröl als ein Basisöl, das eine kinematische Viskosität zwischen 40 und 80 mm²/s bei 25°C hat;
eine Harnstoffverbindung als Verdickungsmittel mit einem Gehalt von 5 bis 30 Massen-% der Gesamtmenge des Schmierfettes, wobei die Harnstoffverbindung durch die folgende chemische Gleichung 1 dargestellt ist: 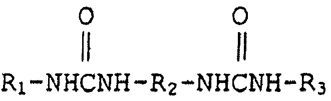
wobei R₂ eine aromatische Kohlenwasserstoffgruppe ist, die 6 bis 15 Kohlenstoffatome hat, und R₁ sowie R₃ jeweils eine alizyklische Kohlenwasserstoffgruppe, die 6 bis 19 Kohlenstoffatome hat, oder eine aromatische Kohlenwasserstoffgruppe sind, die 6 bis 12 Kohlenstoffatome hat;
und Molybdän-Dithiophasphat (Mo-DTP) als einen Hochdruck-Zusatzstoff in einer Menge von 0,5 bis 10 Massen-% der Gesamtmenge des Schmierfettes.

## Revendications

1. Arbre télescopique comprenant :
un arbre mâle (5,41, 61) et un arbre femelle (6, 42, 62) qui sont engagés de manière à être capables d'effectuer un mouvement glissant mais incapables d'effectuer une rotation, dans lequel une périphérie externe de l'arbre mâle (5, 41, 61) et une périphérie interne de l'arbre femelle (6, 42, 62) sont en contact entre elles pour transmettre un couple en cas de rotation, et une graisse est scellée dans un intervalle entre la périphérie externe de l'arbre mâle et la périphérie interne de l'arbre femelle,
**caractérisé en ce que**
la graisse contient
une huile d'ester comme huile de base, présentant une viscosité cinématique de 40 mm²/s à 80 mm²/s à 25 °C ;
un composé d'urée comme épaississant, avec un contenu de 5 % à 30 % en masse de la quantité de graisse totale, ledit composé d'urée étant représenté par le [produit chimique 1] 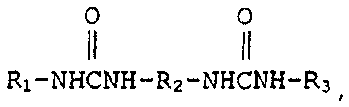 dans lequel R₂ est un groupe hydrocarbure aromatique comportant de 6 à 15 atomes de carbone, et dans lequel R₁ et R₃ sont chacun un groupe hydrocarbure alicyclique comportant de 6 à 19 atomes de carbone ou un groupe hydrocarbure aromatique comportant de 6 à 12 atomes de carbone ;
et un dithiophosphate de molybdène (Mo-DTP) comme additif pour pression extrême, avec un contenu de 0,5 % à 10 % en masse de la quantité de graisse totale.
